# EUROPEAN PATENT APPLICATION

(11) **EP 4 506 307 A1**
(43) Date of publication of application: **12.02.2025**
(21) Application number: 23920626.1
(22) Date of filing: 07.04.2023
(51) Int. Cl.: C01B 25/45, C01B 32/05, H01M 4/58, H01M 10/0525

(54) **LITHIUM MANGANESE IRON PHOSPHATE POSITIVE ELECTRODE MATERIAL AS WELL AS PREPARATION METHOD THEREFOR AND USE THEREOF**

(30) Priority: 07.02.2023 CN 202310073233
(71) Applicant: Eve Power Co., Ltd., Jingmen, Hubei 448000 (CN)
(72) Inventor: WANG, Xiaokun, Jingmen, Hubei 448000 (CN)
(74) Representative: Herrero & Asociados, S.L.
(86) International application number: PCT/CN2023/086922
(87) International publication number: WO 2024/164425

(57) **Abstract**

Provided in the present application are a lithium manganese iron phosphate positive electrode material as well as a preparation method therefor and the use thereof. The preparation method comprises the following steps: mixing a salt solution and a precipitant, then adjusting the pH value of the system and reacting same to obtain an iron-manganese precipitate, the salt solution comprising a ferric salt and a manganese salt; and mixing a lithium source, a phosphorus source and the iron-manganese precipitate and sintering same to obtain the lithium manganese iron phosphate positive electrode material.

## Description

The present application claims the priority of Chinese Patent Application No. 2023100732333, filed to the China Patent Office on February 7, 2023, the disclosure of which is hereby incorporated by reference in their entireties into the present application.

### TECHNICAL FIELD

The present disclosure belongs to the field of battery technology, and relates to a lithium manganese iron phosphate positive electrode material, in particular to a lithium manganese iron phosphate positive electrode material, a method for preparing the same, and an application of the same.

### BACKGROUND

In recent years, with the vigorous development of the new energy industry, particularly the rapid advancement of electric vehicles, requirements for cycle stability and specific capacity of power batteries have become increasingly stringent. Among various positive electrode material systems, lithium manganese iron phosphate (LMFP) exhibits superior safety performance compared to ternary material, higher energy density than lithium iron phosphate, and a distinct cost advantage. However, the inherent olivine crystal structure of LMFP results in poor electrical conductivity and rate capability. Additionally, a valence change of manganese in a positive electrode leads to a Jahn-Teller effect, causing manganese ions dissolution and increased battery polarization. Furthermore, the deposition of the dissolved manganese ions on a surface of a negative electrode may disrupt a structure of a solid electrolyte interface (SEI) layer, leading to capacity loss, degraded cycle performance. In addition, the lithium manganese iron phosphate is synthesized using a solid-phase method typically, resulting in the obtained material with large difference in particle size and poor size uniformity.

As disclosed in the prior art, a low-cost method for preparing lithium iron phosphate and lithium manganese iron phosphate includes the following steps: step 1, an iron source, a manganese source (required for lithium manganese iron phosphate), a lithium source, a phosphorus source, a carbon source and a dopant are weighed according to a stoichiometric ratio and mixed uniformly by means of a dry powder high-efficiency mixing; step 2, the uniformly mixed powder from step 1 is placed in a furnace protected by an inert atmosphere for a first high-temperature sintering to obtain a precursor of the lithium iron phosphate or lithium manganese iron phosphate for sintering; step 3, the precursor of the lithium iron phosphate or lithium manganese iron phosphate from step 2 and a carbon source are weighed according to a stoichiometric ratio, then mixed uniformly by the dry powder high-efficiency mixing to obtain a mixture, and the mixture is granulated and sintered to obtain the lithium manganese iron phosphate material. The disclosed method uses a pure solid-phase method, resulting in the synthesized material with a large particle size, non-uniform particle size distribution, poor dispersibility, and room for improvement in rate capability and cycle performance.

Based on the aforementioned research, a method for preparing a lithium manganese iron phosphate positive electrode material is required to be provided, which is simple in process, has low-energy consumption, and is suitable for industrial production, and the resulting material is not only of small particle size and uniform particle size distribution, but also possesses excellent rate capacity and cycle performance.

### SUMMARY

The objective of the present disclosure is to provide a lithium manganese iron phosphate positive electrode material and a method for preparing the same and an application of the same. The method employs a solid-phase method assisted by solution concentrating, and the synthesized positive electrode material has a smaller particle size with a more uniform particle size distribution, and superior dispersibility, significantly enhancing conductivity, rate capability, and cycling performance of the lithium manganese iron phosphate positive electrode material.

To achieve the objective of the present disclosure, the following technical solutions are adopted.

In a first aspect, the present disclosure provides a method for preparing a lithium manganese iron phosphate positive electrode material, and the method includes the following steps:
(1) mixing a salt solution and a precipitant, followed by adjusting a pH value of a system of the salt solution and the precipitant for reaction to obtain an iron-manganese precipitate, wherein the salt solution includes an iron salt and a manganese salt; and
(2) mixing and sintering a lithium source, a phosphorus source, and the iron-manganese precipitate obtained from step (1) to obtain the lithium manganese iron phosphate positive electrode material.

In the present disclosure, the lithium manganese iron phosphate positive electrode material is synthesized using a solid-phase method assisted by solution concentrating. Specifically, the iron-manganese precipitate is firstly prepared to serve as a common element source of iron and manganese, which can not only promote subsequent generation of lithium manganese iron phosphate but also avoid introduction of excessive impurity ions, and enable a control over the particle size of the material. Subsequently, according to the solid-phase method assisted by solution concentrating, a solid-phase sintering is carried out on the lithium source, phosphoric acid, and the precipitate containing iron and manganese to obtain the lithium manganese iron phosphate positive electrode material with not only a small particle size but also a uniform particle size distribution, effectively improving the dispersibility, rate capability, and cycling performance of the positive electrode material.

In an embodiment, the system in step (1) further includes a stabilizer.

In the present disclosure, during the preparation of the iron-manganese precipitate, the stabilizer is added to match a divalent iron salt, preventing oxidation of divalent iron ions, thereby enhancing purity and yield of the material to ensure performance of the positive electrode material, promoting generation of the iron-manganese precipitate.

In an embodiment, the mixing the salt solution and the precipitant in step (1) includes firstly preparing the salt solution from the manganese salt and the iron salt, followed by adding a solution of the stabilizer and a solution of the precipitant to the salt solution.

In an embodiment, the solution of the precipitant is dropped into the salt solution via a constant flow pump.

In an embodiment, a molar ratio of the stabilizer to the iron salt is (0.5-1):1, such as 0.5:1, 0.6:1, 0.7:1, 0.8:1, 0.9:1, or 1:1, but is not limited to the listed values, and other unlisted values within the numerical range are also applicable.

In an embodiment, the stabilizer includes citric acid.

In an embodiment, the precipitant includes ammonium oxalate.

In an embodiment, the iron salt includes at least one selected from a group consisting of ferrous sulfate, ferrous nitrate, and ferrous chloride. The manganese salt includes at least one selected from a group consisting of manganese sulfate, manganese nitrate, and manganese chloride.

In an embodiment, a temperature of the reaction in step (1) is 55-75°C, such as 55°C, 60°C, 65°C, 70°C, or 75°C, but is not limited to the listed values, and other unlisted values within the numerical range are also applicable.

In the present disclosure, the reaction is carried out with stirring in a reactor, and the temperature of the reaction is required to be controlled within a specific range to ensure the generation of the iron-manganese precipitate. The temperature of the reaction that is excessively high may result in significant disparities in the morphology of the material, whereas the temperature of the reaction that is unduly low may aggravate agglomeration of the material.

In an embodiment, in step (1), the pH value of the system is adjusted to 3-5, such as 3, 3.5, 4, 4.5, or 5, but is not limited to the listed values, and other unlisted values within the numerical range are also applicable.

In the present disclosure, the pH value in step (1) also affects the generation of the iron-manganese precipitate, as well as the particle size and uniformity of the particle size distribution of the iron-manganese precipitate, thereby affecting the particle size of the positive electrode material. A low pH value is unfavorable for material crystallization, while an excessively high pH value increases a residual alkali content of the material, causing the material to easily absorb water, which is adverse to subsequent preparation for a battery cell.

In an embodiment, sulfuric acid and ammonia water are employed to adjust the pH value in step (1).

In an embodiment, the iron salt in step (1) is a divalent iron salt.

In an embodiment, a molar ratio of the iron salt to the manganese salt in step (1) is (5.5-6.5):(3.5-4.5), such as 5.5:4.5, 6:4, or 6.5:3.5, but is not limited to the listed values, and other unlisted values within the numerical range are also applicable.

In an embodiment, in step (1), a total molar amount of the iron salt and the manganese salt to a molar amount of the precipitant is 1:(1-1.2), such as 1:1, 1:1.1, or 1:1.2, but is not limited to the listed values, and other unlisted values within the numerical range are also applicable.

In an embodiment, in step (2), the lithium source includes lithium carbonate, and the phosphorus source includes at least one of phosphoric acid and ammonium dihydrogen phosphate.

In an embodiment, the sintering in step (2) includes a first sintering and a second sintering performed in sequence.

In an embodiment, a carbon source is added during the second sintering.

In the present disclosure, during the second sintering, the carbon source is added to achieve carbon coating over a surface of the positive electrode material, thus enhancing conductivity of the material, preventing the dissolution of the manganese ions, and consequently improving electrochemical property of the material.

In an embodiment, the carbon source includes glucose.

In an embodiment, the surface of the lithium manganese iron phosphate positive electrode material in step (2) is coated with a carbon coating. A content of the carbon coating is 4 wt%-8 wt%, such as 4 wt%, 5 wt%, 6 wt%, 7 wt%, or 8 wt%, but is not limited to the listed values, and other unlisted values within the numerical range are also applicable.

In the present disclosure, the content of the carbon coating affects electrochemical property of the material. An excessively high carbon content, to a certain degree, exacerbates side reactions between the positive electrode material and the electrolyte, affecting rate capability and cycle performance of the material; a low carbon content fails to effectively increase the electronic conductivity and ion diffusion coefficient of the positive electrode material, generating no significant improvement to the performance of the material.

In an embodiment, after the first sintering, a sintered material is obtained. A ball-milling mixing is performed on the sintered material and the carbon source to obtain a mixture, and the second sintering is performed on the mixture.

In an embodiment, a rotation speed of the ball-milling mixing is 250 r/min-450 r/min, such as 250 r/min, 300 r/min, 350 r/min, 400 r/min, or 450 r/min, and a duration of the ball-milling mixing is 5 h-7 h, such as 5 h, 5.5 h, 6 h, 6.5 h, or 7 h, but is not limited to the listed values, and other unlisted values within the numerical range are also applicable.

In an embodiment, an atmosphere for the first sintering includes a shielding gas and a reducing gas. A content of the reducing gas is 40 vol%-60 vol%, such as 40 vol%, 50 vol%, or 60 vol%, but is not limited to the enumerated values, and other unlisted values within the numerical range are also applicable.

In an embodiment, a temperature of the first sintering is 200-300°C, such as 200°C, 250°C, or 300°C, and a duration of the first sintering is 1 h-3 h, such as 1 h, 2 h, or 3 h, but is not limited to the listed values, and other unlisted values within the numerical range are also applicable.

In an embodiment, an atmosphere of the second sintering includes a shielding gas and a reducing gas. A content of the reducing gas is 40 vol%-60 vol%, such as 40 vol%, 50 vol%, or 60 vol%, but is not limited to the listed values, and other unlisted values within the numerical range are also applicable.

In an embodiment, the shielding gas includes at least one selected from a group consisting of argon, helium, nitrogen, or krypton. The reducing gas includes hydrogen.

In an embodiment, a temperature of the second sintering is 500°C-700°C, such as 500°C, 600°C, or 700°C. A duration of the second sintering is 4 h-6 h, such as 4 h, 5 h, or 6 h, but not limited to the listed values, and other unlisted values within the numerical range are also applicable.

As a technical solution of the method described in the present disclosure, the method includes the following steps.
(1) A salt solution is prepared from a manganese salt and an iron salt, a solution of a stabilizer and a solution of a precipitant are added to the salt solution to obtain a system, a pH value of the system is adjusted to 3-5, and the system is maintained at 55°C-75°C for reaction to obtain an iron-manganese precipitate.

Specifically, a molar ratio of the stabilizer to the iron salt is (0.5-1): 1, a molar ratio of the iron salt to the manganese salt is (5.5-6.5):(3.5-4.5), and a total molar amount of the iron salt and the manganese salt to a molar amount of the precipitant is 1:(1-1.2).

(2) A lithium source, phosphorus source, and the iron-manganese precipitate obtained from step (1) are mixed according to a formula amount, then firstly sintered at 200°C-300°C for 1h-3h in a shielding gas and reducing gas to obtain a sintered material; the sintered material is ball-milling mixed with a carbon source at 250 rpm/min-450 rpm/min for 5 h-7 h, and then secondly sintered at 500°C-700°C for 4 h-6 h in the shielding and reducing gas to obtain the lithium manganese iron phosphate positive electrode material coated with carbon. Specifically, a content of the carbon coating is 4wt% to 8wt%.

In a second aspect, the present disclosure provides a lithium manganese iron phosphate positive electrode material. The lithium manganese iron phosphate positive electrode material is prepared by the method according to the first aspect.

In an embodiment, a chemical formula of the lithium manganese iron phosphate positive electrode material is LiMnₓFe₁₋ₓPO₄. In detail, x satisfies: 0<x<1. Specifically, x may be 0.2, 0.4, 0.6, 0.8, or 0.9, but is not limited to the listed values, and other unlisted values within the numerical range are also applicable. In an embodiment, 0.35≤x≤0.45.

In a third aspect, the present disclosure provides a lithium-ion battery. The lithium-ion battery includes the lithium manganese iron phosphate positive electrode material according to the second aspect.

Compared to the existing technology, the present disclosure has the following advantages.

In the present disclosure, the lithium manganese iron phosphate positive electrode material is synthesized by means of a solid-phase method assisted by solution concentrating. This method is not only simple in process and easy to implement, with low energy consumption, capable of industrial large-scale production, but also compared to the positive electrode material synthesized by a pure solid-phase method, the positive electrode material synthesized by the solid-phase method assisted by solution concentrating in the present disclosure has a smaller particle size, more uniform particle size distribution, better dispersibility, and improved electrical conductivity through carbon coating, thus enhancing rate capability and cycling performance of the battery. Moreover, the iron-manganese precipitate containing divalent iron ions is firstly prepared to serve as a common source of iron and manganese, not only promoting subsequent generation of the lithium manganese iron phosphate, but also avoiding introduction of excessive impurity ions, and enabling the control over particle size of the material, thereby effectively improving the dispersibility, rate capability, and cycling performance of the positive electrode material.

### IMPLEMENTATIONS

### Example 1

The present example provided a method for preparing a lithium manganese iron phosphate positive electrode material. The method includes the following steps.
(1) A manganese salt and an iron salt were dissolved in water to produce a salt solution with a concentration of 1 mol/L, a stabilizer was added into the salt solution, and a solution of a precipitant with a concentration of 0.5 mol/L was dropped into the salt solution by means of a constant flow pump to obtain a system. Subsequently, a pH value of the system was adjusted to 4 with sulfuric acid and ammonia water, and then the system is stirred at 60°C for reaction to obtain an iron-manganese precipitate (Fe_{0.6}Mn_{0.4}C₂O₄).

A molar ratio of the stabilizer to the iron salt was 0.7:1, a molar ratio of the iron salt to the manganese salt was 6:4, and a total molar amount of the iron salt and the manganese salt to a molar amount of the precipitant was 1:1.1.

The iron salt was FeSO₄, the manganese source was MnSO₄, the stabilizer was citric acid, and the precipitant was (NH)₄C₂O₄.

(2) A lithium source, phosphorus source, and the iron-manganese precipitate obtained from step (1) were mixed in a molar ratio of 0.5:1:1 to obtain a mixture. Subsequently, in an atmosphere of argon and hydrogen with a content of 50 vol%, the mixture was firstly sintered at a temperature of 250°C for 2 h to obtain a sintered material. The sintered material was ball-milling mixed with a carbon source using anhydrous ethanol as a medium at a rotation speed of 350 r/min for 6 h, and secondly sintered at 600°C for 5 h, in an atmosphere of argon and hydrogen with a content of 40 vol%, to obtain a carbon-coated lithium manganese iron phosphate positive electrode material (LiMn_{0.4}Fe_{0.6}PO₄), with a content of carbon coating being 6 wt%.

The lithium source was Li₂CO₃, the carbon source was glucose, and the phosphorus source was H₃PO₄.

### Example

The present example provided a method for preparing a lithium manganese iron phosphate positive electrode material. The method includes the following steps.
(1) A manganese salt and an iron salt were dissolved in water to produce a salt solution with a concentration of 1 mol/L, a stabilizer was added into the salt solution, and a solution of a precipitant with a concentration of 0.5 mol/L was dropped into the salt solution by means of a constant flow pump to obtain a system. Subsequently, a pH value of the system was adjusted to 3 with sulfuric acid and ammonia water, and then the system is stirred at 55°C for reaction to obtain an iron-manganese precipitate (Fe_{0.55}Mn_{0.45}C₂O₄).

A molar ratio of the stabilizer to the iron salt was 0.5:1, a molar ratio of the iron salt to the manganese salt was 5.5:4.5, and a total molar amount of the iron salt and the manganese salt to a molar amount of the precipitant was 1:1.

The iron salt was ferrous nitrate, the manganese source was manganese nitrate, the stabilizer was citric acid, and the precipitant was (NH)₄C₂O₄.

(2) A lithium source, phosphorus source, and the iron-manganese precipitate obtained from step (1) were mixed in a molar ratio of 0.5:1:1 to obtain a mixture. Subsequently, in an atmosphere of argon and hydrogen with a content of 40 vol%, the mixture was firstly sintered at a temperature of 300°C for 1 h to obtain a sintered material. The sintered material was ball-milling mixed with a carbon source using anhydrous ethanol as a medium at a rotation speed of 450 r/min for 5 h, and secondly sintered at 700°C for 4 h, in an atmosphere of argon and hydrogen with a content of 60 vol%, to obtain a carbon-coated lithium manganese iron phosphate positive electrode material (LiMn_{0.45}Fe_{0.55}PO₄), with a content of carbon coating being 4 wt%.

The lithium source was Li₂CO₃, the carbon source was glucose, and the phosphorus source was H₃PO₄.

### Example

The present example provided a method for preparing a lithium manganese iron phosphate positive electrode material. The method includes the following steps.
(1) A manganese salt and an iron salt were dissolved in water to produce a salt solution with a concentration of 1 mol/L, a stabilizer was added into the salt solution, and a solution of a precipitant with a concentration of 0.5 mol/L was dropped into the salt solution by means of a constant flow pump to obtain a system. Subsequently, a pH value of the system was adjusted to 5 with sulfuric acid and ammonia water, and then the system is stirred at 75°C for reaction to obtain an iron-manganese precipitate (Fe_{0.65}Mn_{0.35}C₂O₄).

A molar ratio of the stabilizer to the iron salt was 1:1, a molar ratio of the iron salt to the manganese salt was 6.5:3.5, and a total molar amount of the iron salt and the manganese salt to a molar amount of the precipitant was 1:1.2.

The iron salt was FeSO₄, the manganese source was MnSO₄, the stabilizer was citric acid, and the precipitant was (NH)₄C₂O₄.

(2) A lithium source, phosphorus source, and the iron-manganese precipitate obtained from step (1) were mixed in a molar ratio of 0.5:1:1 to obtain a mixture. Subsequently, in an atmosphere of argon and hydrogen with a content of 60 vol%, the mixture was firstly sintered at a temperature of 200°C for 3 h to obtain a sintered material. The sintered material was ball-milling mixed with a carbon source using anhydrous ethanol as a medium at a rotation speed of 250 r/min for 7 h, and secondly sintered at 500°C for 6 h, in an atmosphere of argon and hydrogen with a content of 40 vol%, to obtain a carbon-coated lithium manganese iron phosphate positive electrode material (LiMn_{0.35}Fe_{0.65}PO₄), with a content of carbon coating being 5 wt%.

The lithium source was Li₂CO₃, the carbon source was glucose, and the phosphorus source was ammonium hydrogen phosphate.

### Example

The present example provided a method for preparing a lithium manganese iron phosphate positive electrode material. Operations in this method were consistent with those in Example 1 except that the content of the carbon coating was 8 wt% in step (2).

### Example

The present example provided a method for preparing a lithium manganese iron phosphate positive electrode material. Operations in this method were consistent with those in Example 1 except that the content of the carbon coating was 3 wt% in step (2).

### Example

The present example provided a method for preparing a lithium manganese iron phosphate positive electrode material. Operations in this method were consistent with those in Example 1 except that the content of the carbon coating was 9 wt% in step (2).

### Example

The present example provided a method for preparing a lithium manganese iron phosphate positive electrode material. Operations in this method were consistent with those in Example 1 except that the temperature of the reaction was 45 °C in step (1).

### Example

The present example provided a method for preparing a lithium manganese iron phosphate positive electrode material. Operations in this method were consistent with those in Example 1 except that the temperature of the reaction was 85 °C in step (1).

### Example

The present example provided a method for preparing a lithium manganese iron phosphate positive electrode material. Operations in this method were consistent with those in Example 1 except that the pH value was 2 in step (1).

### Example

The present example provided a method for preparing a lithium manganese iron phosphate positive electrode material. Operations in this method were consistent with those in Example 1 except that the pH value was 6 in step (1).

### Example

The present example provided a method for preparing a lithium manganese iron phosphate positive electrode material. Operations in this method were consistent with those in Example 1 except that no stabilizer was added in step (1).

### Example

The present example provided a method for preparing a lithium manganese iron phosphate positive electrode material. Operations in this method were consistent with those in Example 1 except that the iron source was Fe₂(S0₄)₃ in step (1).

### Comparative Example 1

The present example provided a method for preparing a lithium manganese iron phosphate positive electrode material. The method includes the following steps.
(1) Li₂CO₃, MnSO₄, FeSO₄, and H₃PO₄ were mixed together in a molar ratio of 0.5:0.6:0.4:1, and subsequently firstly sintered at 250°C for 2 h, in an atmosphere of argon and hydrogen with a content of 50 vol%, to obtain a precursor powder.
(2) The precursor powder from step (1) was ball-milling mixed with glucose using anhydrous ethanol as a medium at a rotation speed of 350 r/min for 6 h, and subsequently secondly sintered at 600°C for 5 h, in an atmosphere of argon and hydrogen with a content of 40 vol%, to obtain a carbon-coated lithium manganese iron phosphate positive electrode material (LiMn_{0.4}Fe_{0.6}PO₄), with a content of carbon coating being 6 wt%.

### Comparative Example 2

The present comparative example provided a method for preparing a lithium manganese iron phosphate positive electrode material. Operations in this method were consistent with those in Comparative Example 1 except that the lithium source and the phosphorus source in step (2) were added into the system in step (1).

The lithium manganese iron phosphate positive electrode material obtained from each of the above examples and comparative examples was tested for particle size D50. In addition, the lithium manganese iron phosphate positive electrode material was prepared into positive electrode sheet. The positive electrode sheet, along with a graphite negative electrode sheet, a separator which was a polyethylene (PE) base membrane with both sides coated by boehmite of a thickness of 12 µm, and an electrolyte (1 mol/L LiPF6/(EC+DMC), EC and DMC serving as solvents with a volume ratio of 1:1), was assembled into a battery. Electrochemical tests were conducted on the battery using a LAND battery tester. Specifically, the electrochemical tests included initial specific capacity test, rate capability test, and cycling performance test. Initial Specific Capacity Test: The obtained battery was subjected to charge-discharge tests in an environment maintained at 25°C±2°C. In detail, a charge-discharge test voltage was 2.5 V-4.2 V, a charge-discharge current density was 1.0 C, and 1 C specific capacity of the positive electrode material was tested.

Rate Capability Test: The obtained battery was subjected to charge-discharge tests in an environment maintained at 25°C±2°C. In detail, a charge-discharge voltage was 2.5 V-4.2 V. Discharge current densities were set at 1C and 5C, respectively. A ratio of a discharge capacity at a rate of 5C to a discharge capacity at a rate of 1C was calculated, with a higher resulting value indicating better rate capability of the positive electrode material.

Cycling Performance Test: In an environment maintained at 25°C±2°C, the battery was charged at a constant current of 1C until a cut-off voltage of 4.2V was reached, subsequently, the battery was charged at a constant voltage until a current dropped to 0.05C, at which point charging was stopped, and the battery was then rested for 30 minutes. Regarding discharging, the battery was discharged at a constant current of 1C until a cut-off voltage of 2.5V was reached. The charge-discharge cycle was repeated 100 times, with a ratio of a discharge capacity at the 100th cycle to a discharge capacity at the 1st cycle representing a 100-cycle capacity retention rate of the battery.

### Test results are listed in the following table:

**Table 1**

| | paticle size D50 (µm) | initial specific capacity(%) | specific capacity of the positive electrode(mAh/g) | 5C/1C capacity retention rate(%) | 100-cycle capacity retention rate(%)) |
|---|---|---|---|---|---|
| Ex. 1 | 0.61 | 92.8 | 155.3 | 98.8 | 99.8 |
| Ex. 2 | 0.69 | 91.3 | 151.6 | 97.2 | 97.5 |
| Ex. 3 | 0.73 | 90.8 | 153.2 | 97.7 | 98.3 |
| Ex. 4 | 0.77 | 89.2 | 152.7 | 96.8 | 98.1 |
| Ex. 5 | 0.78 | 88.5 | 150 | 96.2 | 95 |
| Ex. 6 | 0.81 | 87.3 | 147 | 95.1 | 94.5 |
| Ex. 7 | 0.95 | 86.9 | 144 | 95 | 93.2 |
| Ex. 8 | 0.96 | 86.1 | 143.5 | 95.1 | 93.3 |
| Ex. 9 | 0.97 | 85.8 | 143.1 | 94.8 | 93.2 |
| Ex. 10 | 1.2 | 85.3 | 142.5 | 94.4 | 93 |
| Ex. 11 | 1.21 | 85 | 142.3 | 94.5 | 93.1 |
| Ex. 12 | 1.32 | 84.8 | 142.5 | 94.1 | 93 |
| Comp. Ex. 1 | 0.84 | 82.5 | 139 | 91.39 | 92.1 |
| Comp. Ex. 2 | 1.35 | 81.2 | 137.8 | 90.7 | 91.49 |

The following can be seen from the above table.
(1) The lithium manganese iron phosphate positive electrode material obtained in the present disclosure has a smaller particle size and exhibits superior rate capability and cycling performance. As can be seen from Example 1 and Comparative Example 1, compared to the conventional solid-phase synthesis method applied in Comparative Example 1, the solid-phase method assisted by solution concentrating employed in the present disclosure can reduce the particle size of the material, thereby effectively enhancing the electrochemical properties of the material. The comparison between Example 1 and Comparative Example 2 indicates that a timing of adding various raw materials, in conjunction with a mutual cooperation of step (1) and step (2), is necessary to prepare the lithium manganese iron phosphate positive electrode material with a smaller particle size and superior electrochemical properties, as in the present disclosure. As can be seen from Example 1 and Examples 5-6, the content of carbon coating affects the conductivity and specific capacity of the material, thus influencing the electrochemical properties, and therefore, the content is required to be within a reasonable range to ensure the material possesses outstanding comprehensive electrochemical property.
(2) It can be seen from Example 1 and Examples 7-10 that reaction temperature and pH value in step (1) have an impact on the particle size distribution and electrochemical properties of the material. The comparison between Example 1 and Example 11 demonstrates that the stabilizer mentioned in the present disclosure can prevent the oxidation of the divalent iron source, thus ensuring the generation of the iron-manganese precipitate containing divalent iron ions. Without the addition of the stabilizer, the generation of the precipitate and the purity of the material would be affected, thereby impacting material performance. The comparison between Example 1 and Example 12 shows that using a trivalent iron source as a raw material introduces impurity ions, affecting material performance.

In conclusion, the present disclosure provides a lithium manganese iron phosphate positive electrode material, method for preparing the same, and an application of the same. The method employs a solid-phase method assisted by solution concentrating, resulting in the synthesized positive electrode material with a smaller and more uniform particle size and better dispersibility. In this way, the conductivity, rate capability, and cycling performance of the lithium manganese iron phosphate positive electrode material can be significantly enhanced.

## Claims

1. A method for preparing a lithium manganese iron phosphate positive electrode material, wherein the method comprises the following steps:
(1) mixing a salt solution and a precipitant, followed by adjusting a pH value of a system of the salt solution and the precipitant for reaction to obtain an iron-manganese precipitate, wherein the salt solution comprises an iron salt and a manganese salt; and
(2) mixing and sintering a lithium source, a phosphorus source, and the iron-manganese precipitate obtained from step (1) to obtain the lithium manganese iron phosphate positive electrode material.

2. The method as claimed in claim 1, wherein the system in step (1) further comprises a stabilizer.

3. The method as claimed in claim 2, wherein the mixing the salt solution and the precipitant in step (1) comprises firstly preparing the salt solution from the manganese salt and the iron salt, followed by adding a solution of the stabilizer and a solution of the precipitant to the salt solution.

4. The method as claimed in claim 2, wherein a molar ratio of the stabilizer to the iron salt is (0.5-1): 1.

5. The method as claimed in claim 2, wherein the stabilizer comprises citric acid, and the precipitant comprises ammonium oxalate.

6. The method as claimed in any one of claims 1-5, wherein a temperature of the reaction in step (1) is 55°C-75°C;
the pH value of the system in step (1) is adjusted to 3-5;
the pH value of the system is adjusted by means of sulfuric acid and ammonia water.

7. The method as claimed in any one of claims 1-6, wherein the iron salt in step (1) is a divalent iron salt;
a molar ratio of the iron salt to the manganese salt in step (1) is (5.5-6.5):(3.5-4.5).

8. The method as claimed in any one of claims 2-6, wherein in step (1), a ratio of a total molar amount of the iron salt and the manganese salt to a molar amount of the precipitant is 1:(1-1.2).

9. The method as claimed in any one of claims 1-8, wherein the sintering in step (2) comprises a first sintering and a second sintering performed in sequence;
a carbon source is added during the second sintering.

10. The method as claimed in any one of claims 1-9, wherein a surface of the lithium manganese iron phosphate positive electrode material in step (2) is coated with a carbon coating, and a content of the carbon coating is 4 wt%-8 wt%.

11. The method as claimed in claim 9, after the first sintering, a sintered material is obtained; a ball-milling mixing is performed on the sintered material and the carbon source to obtain a mixture, and the second sintering is performed on the mixture;
a rotating speed of the ball-milling mixing is 250 r/min-450 r/min, and a duration of the ball-milling mixing is 5 h-7 h.

12. The method as claimed in claim 9 or 11, wherein an atmosphere during the first sintering comprises a shielding gas and a reducing gas;
a temperature of the first sintering is 200°C-300°C, and a duration of the first sintering is 1 h-3 h;
an atmosphere during the second sintering comprises a shielding gas and a reducing gas;
a temperature of the second sintering is 500°C-700°C, and a duration of the second sintering is 4 h-6 h.

13. A lithium manganese iron phosphate positive electrode material, wherein the lithium manganese iron phosphate positive electrode material is prepared by the method as claimed in any one of claims 1-12.

14. A lithium-ion battery, wherein the lithium-ion battery comprises the lithium manganese iron phosphate positive electrode material as claimed in claim 13.
